# EUROPÄISCHE PATENTSCHRIFT

(11) **EP 1 382 509 B1**
(45) Veröffentlichungstag und Bekanntmachung des Hinweises auf die Patenterteilung: **06.09.2006**
(21) Anmeldenummer: 03003799.8
(22) Anmeldetag: 20.02.2003
(51) Int. Cl.: B62D 1/16

(54) **Lenksäule**
Steering column
Colonne de direction

(30) Priorität: 16.07.2002 DE 10232041
(43) Veröffentlichungstag der Anmeldung: 21.01.2004
(73) Patentinhaber: ThyssenKrupp Presta AG, 9492 Eschen (LI)
(72) Erfinder: Ilario, Spano, 9495 Triesen (LI)
(74) Vertreter: Hefel, Herbert

(56) Entgegenhaltungen:
- EP-A- 0 802 104
- DE-A- 2 948 759

## Beschreibung

Die Erfindung betrifft eine Lenksäule mit einem eine Lenkspindel aufnehmenden Mantelrohr und einem chassisfesten Konsolenteil, wobei im geöffneten Zustand einer Feststellvorrichtung das Mantelrohr gegenüber dem Konsolenteil begrenzt verschiebbar ist und die Feststellvorrichtung mittels einer Spannvorrichtung öffenund schließbar ist.

Derartige verstellbare Lenksäulen sind in unterschiedlichen Ausführungsformen bekannt. Üblicherweise kann hierbei sowohl die Länge der Lenksäule als auch deren Neigung bzw. Höhe im geöffneten Zustand der Feststellvorrichtung verändert werden. Zur Fixierung des Mantelrohrs im geschlossenen Zustand der Feststellvorrichtung können beispielsweise sich kreuzende Pakete von Lamellen vorgesehen sein, von denen das eine am Mantelrohr und das andere am Konsolenteil festgelegt ist und die von einem Spannbolzen durchsetzt werden und mittels der Spannvorrichtung gegenseitig verklemmt werden. Eine solche verstellbare Lenksäule ist beispielsweise aus der EP 0 802 104 B1 bekannt. Zur Ermöglichung der Verstellung sind in den Lamellenpaketen sowie im Montagerohr und im Konsolenteil sich kreuzende Langlöcher angeordnet, die vom Spannbolzen durchsetzt werden. Feststellvörrichtungen mit Lamellen oder lamellenartigen Teilen sind unter anderem weiters auch aus der EP 170 194 A1, US-PS 5,606,891, DE 2 948 759 und EP 0 440 698 B1 bekannt. Nachteilig bei Lenksäulen mit Lamellen aufweisenden Feststellvorrichtungen ist es unter anderem, daß zur Erzielung einer hohen Haltekraft im geschlossenen Zustand eine relativ große Anzahl von Lamellen erforderlich ist, wodurch auch im geöffneten Zustand der Feststellvorrichtung eine relativ große Reibungskraft zur Verstellung der Lenksäule zu überwinden ist.

Aus der EP 0 836 981 B1 ist weiters eine verstellbare Lenksäule bekannt, bei der die Feststellvorrichtung gezahnte Teile aufweist, deren Zahnungen im geschlossenen Zustand der Feststellvorrichtung ineinander eingreifen. Die Verstellung der Lenksäule ist in geöffnetem Zustand sehr leichtgängig. Es kann bei einer solchen Feststellvorrichtung allerdings das Problem auftreten, daß die Spitzen der Zähne der einander gegenüberliegenden Verzahnungen sich unmittelbar gegenüber stehen und beim Schließen der Spannvorrichtung aufeinander treffen, so daß die Feststellvorrichtung nicht ordnungsgemäß geschlossen wird. Im Crash-Fall kann es dadurch zu einer unkontrollierten Verschiebung der Lenksäule kommen. Außerdem ist das Schließen der Spannvorrichtung im Falle des Aufeinandertreffens der Spitzen der Zähne nicht oder nicht vollständig oder nur unter stark erhöhtem Kraftaufwand möglich.

Aufgabe der Erfindung ist es, eine verbesserte Lenksäule der eingangs genannten Art bereitzustellen, die im geöffneten Zustand der Feststellvorrichtung leichtgängig verstellbar ist und deren Feststellvorrichtung in jeder Verstellposition der Lenksäule problemlos schließbar ist. Erfindungsgemäß gelingt dies durch eine Lenksäule mit den Merkmalen des Patentanspruchs 1.

Im geschlossenen Zustand der Feststellvorrichtung kann das mindestens eine Eingriffselement des ersten Feststellteils in ein bei dieser Verstellposition dem Eingriffselement gegenüberliegendes Aufnahmeloch des zweiten Feststellteils eingreifen. Falls bei dieser Verstellposition dem Eingriffselement gerade kein Aufnahmeloch direkt gegenüberliegt, kann die Spannvorrichtung dennoch geschlossen werden, wobei das Eingriffselement gegen die Kraft der das Eingriffselement beaufschlagenden Feder weiter in das Loch, in welchem es gelagert ist, eindrückbar ist und mit seinem freien Ende an der Oberfläche des zweiten Feststellteils im Bereich zwischen zwei Aufnahmelöchern anliegt. Wenn in späterer Folge eine Kraft auf die Lenkspindel der Lenksäule einwirkt, die entweder beim normalen Betrieb oder im Crash-Fall ausgeübt wird, und es zu einer kleinen gegenseitigen Verschiebung der beiden Feststellteile kommt, so kann das Eingriffselement in ein Aufnahmeloch des zweiten Feststellteils einrasten, sobald ihm ein solches gegenüberliegt, wobei die Lenksäule nunmehr in dieser Lage gegenüber einer weiteren Verstellung gesichert wird.

In einer vorteilhaften Ausführungsform der Erfindung sind mehrere Eingriffselemente vorgesehen, denen jeweils mehrere Aufnahmelöcher zugeordnet sind. Es kann dadurch die Strecke der Verstellung zwischen zwei Verstellpositionen, in welchen ein Einrasten eines der Eingriffselemente in eines der Aufnahmelöcher erfolgt, sehr klein sein.

Weitere Vorteile und Einzelheiten der Erfindung werden im folgenden anhand des in der beiliegenden Zeichnung dargestellten Ausführungsbeispiels erläutert. In der Zeichnung zeigen:
- Fig. 1: eine Seitenansicht der Lenksäule in ihrem erfindungswesentlichen Abschnitt;
- Fig. 2: eine Seitenansicht von der anderen Seite der Lenksäule;
- Fig. 3: einen Schnitt entlang der Linie AA von Fig. 1;
- Fig. 4: einen vergrößerten Ausschnitt von Fig. 3;
- Fig. 5: eine Ansicht von unten, teilweise im Schnitt entlang der Linie BB von Fig. 2;
- Fig. 6: einen vergrößerten Ausschnitt von Fig. 5;
- Fig. 7: einen Ausschnitt der Lenksäule in einem Fig. 6 entsprechenden Schnitt im geschlossenen Zustand der Feststellvorrichtung;
- Fig. 8: das erste Feststellteil in einer Explosionsdarstellung zusammen mit dem zweiten Feststellteil und
- Fig. 9: das erste und das zweite Feststellteil in einer einer geschlossenen Position der Lenksäule entsprechenden Stellung, teilweise im Schnitt.

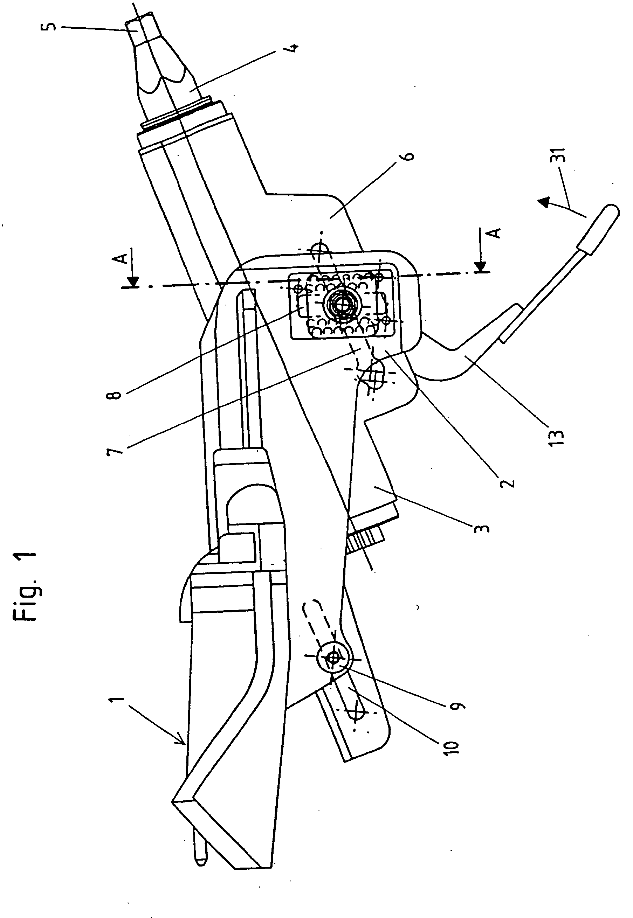

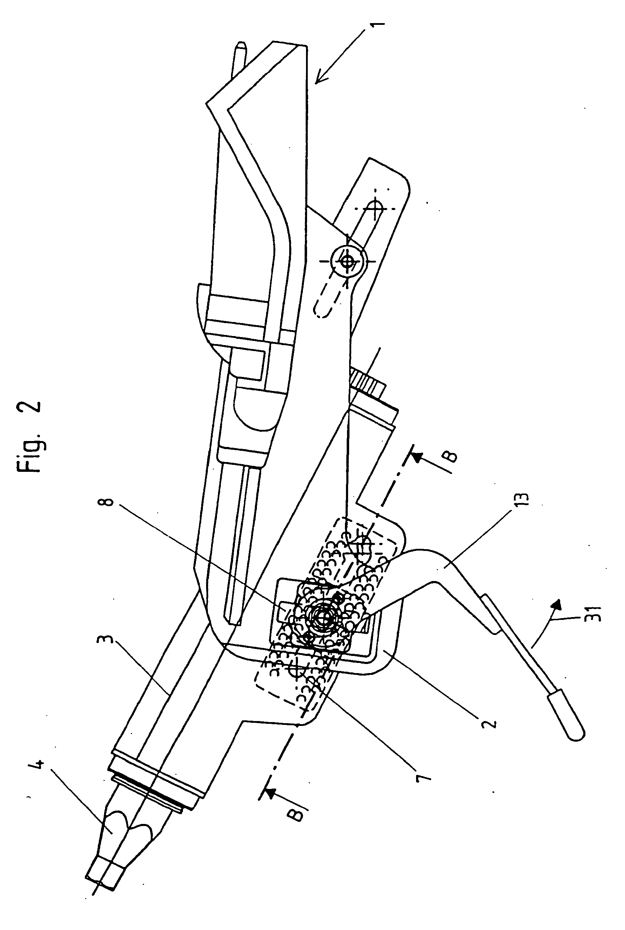

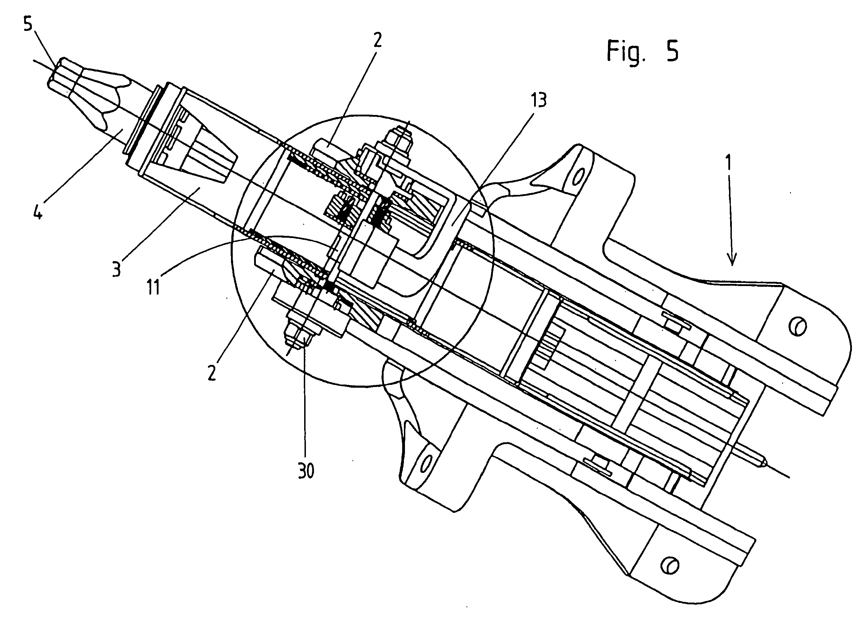

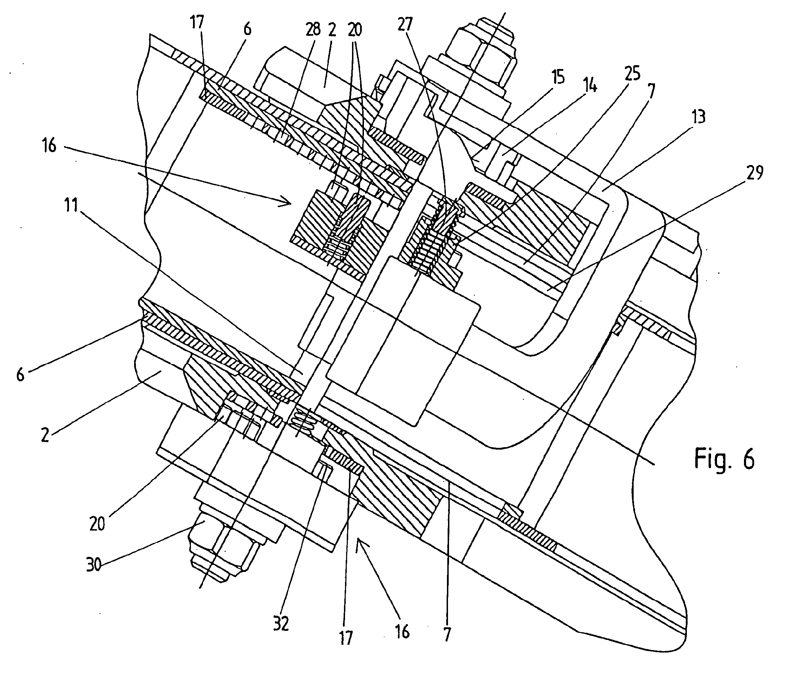

Die Lenksäule nach den Fig. 1 bis 7 weist ein chassisfestes Konsolenteil 1 auf, welches an einem Teil der Karosserie eines Kraftfahrzeuges befestigbar ist. Das Konsolenteil 1 weist zwei nach unten abstehende Schenkel 2 auf, zwischen denen ein Mantelrohr 3 mit planen parallelen Seitenflanken liegt. Im Mantelrohr 3 ist ein Abschnitt der Lenkspindel 4 aufgenommen und drehbar gelagert. Am vorderen Ende 5 der Lenkspindel 4 ist ein Lenkrad befestigbar, das andere Ende ist in herkömmlicher Weise mit weiteren, in den Fig. nicht dargestellten Abschnitten der Lenkspindel verbindbar. Die in den Fig. nicht dargestellten Teile der Lenksäule können in herkömmlicher Weise aufgebaut sein und werden hier nicht näher erläutert.

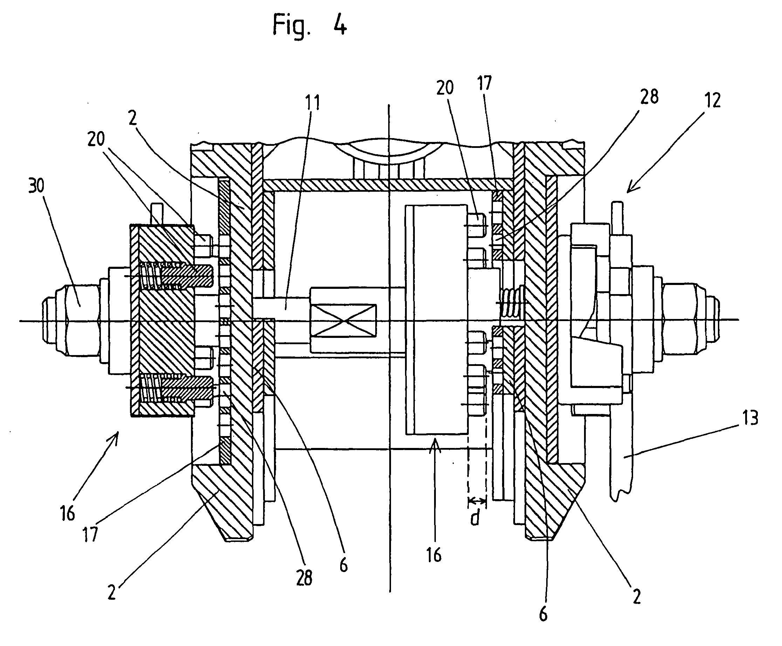

Das Mantelrohr 3 weist zwei nach unten abstehende Wangen 6 auf, die beispielsweise einteilig mit dem Mantelrohr 3 ausgebildet sind und im Schnitt (Fig. 4) gesehen innerhalb der Schenkel 2 des Konsolenteils 1 liegen. Die Wangen 6 weisen parallel zur Lenkspindel 4 verlaufende Langlöcher 7 auf und in den Schenkeln 2 sind winkelig zu den Langlöchern 7 verlaufende Langlöcher 8 ausgebildet, wobei die Längsachsen der Langlöcher 7 und der Langlöcher 8 vorzugsweise einen Winkel von mindestens 45° miteinander einschließen. Die Langlöcher 7 dienen zur Verstellung der Lenksäule in Längsrichtung der hierzu teleskopierbar ausgebildeten Lenkspindel 4, während die Langlöcher 8 zur Neigungs- bzw. Höhenverstellung der Lenksäule dienen. Die Schwenkachse dieser Neigungsverstellung wird im gezeigten Ausführungsbeispiel von Bolzen 9 gebildet, die am Konsolenteil 1 festgelegt sind und parallel zu den Langlöchern 7 verlaufende Langlöcher 10 im Mantelrohr 3 durchsetzen. Denkbar und möglich wäre es auch, daß die Schwenkachse zur Neigungsverstellung der Lenksäule von einem Kardangelenk der Lenkspindel selbst gebildet wird.

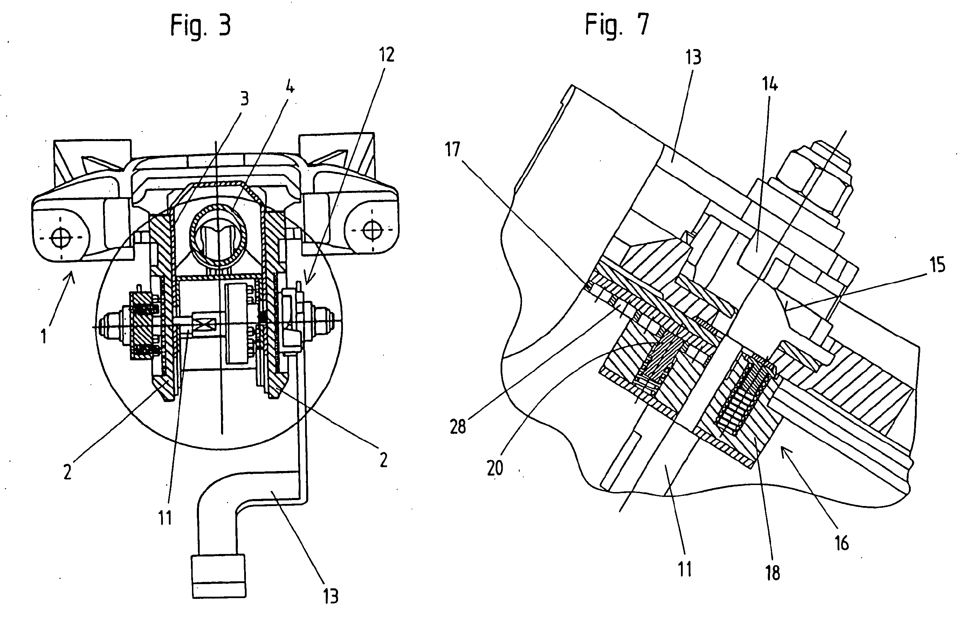

Die Langlöcher 7, 8 im Mantelrohr 3 bzw. Konsolenteil 1 werden von einem Spannbolzen 11 durchsetzt. Mittels einer Spannvorrichtung 12 kann der Spannbolzen 11 bezogen auf den Schnitt gemäß Fig. 3 nach rechts verschoben werden, wobei eine Feststoffvorrichtung der Lenksäule geschlossen wird. Die Spannvorrichtung kann hierbei ein mit einem Spannhebel 13 starr verbundenes Nockenteil aufweisen, welches in Umfangsrichtung mehrere Nocken 14 besitzt, die mit Schrägflächen 15 eines Druckteils zusammenwirken. Andere Ausbildungen von Spannvorrichturigen beispielsweise entsprechend dem in der Beschreibungseinleitung genannten Stand der Technik, sind denkbar und möglich.

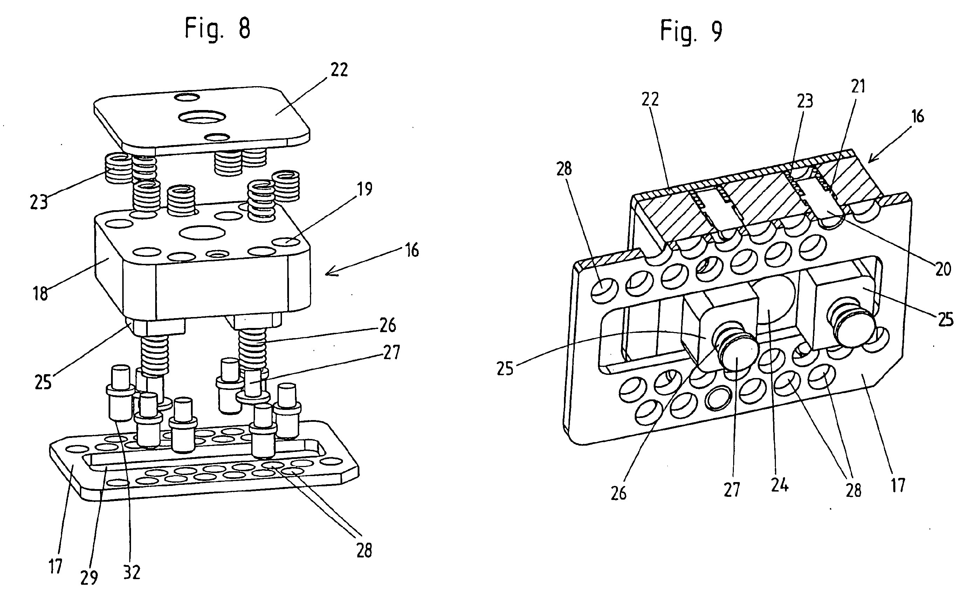

Die Feststellvorrichtung der Lenksäule umfaßt erste und zweite Feststellteile 16, 17, die im geschlossenen Zustand der Feststellvorrichtung zusammenwirken. Wie insbesondere aus den Fig. 8 und 9 hervorgeht, weist das erste Feststellteil 16 einen Körper 18 mit Löchern 19 auf, deren innerer Durchmesser auf der dem zweiten Feststellteil 17 zugewandten Seite einen verringerten Abschnitt aufweist, wobei eine Anlageschulter gebildet wird. In die Löcher 19 sind von der dem zweiten Feststellteil 17 abgewandten Seite her stiftförmige Eingriffselemente 20 eingesetzt, die einen nach außen abstehenden Ringflansch 21 aufweisen. Zwischen den Eingriffselementen 20 und einer auf die vom zweiten Feststellteil 17 abgewandte Seite des Körpers 18 aufschraubbare Abdeckplatte 22 sind Federn 23 eingesetzt. Im unbelasteten Zustand der Eingriffselemente 20 liegen diese aufgrund der Federn 23 mit ihren Ringflanschen 21 an der Schulter des jeweiligen Lochs 19 an und stehen auf der dem zweiten Feststellteil 17 zugewandten Seite des Körpers 18 um einen Überstand d (Fig. 4) über diesen vor. Das erste Feststellteil 16 besitzt weiters eine Durchgangsbohrung 24 zum Durchtritt des Spannbolzens 11. Auf der dem zweiten Feststellteil 17 zugewandten Seite sind am Körper 18 Fortsätze 25 angeordnet, die Sackbohrungen aufweisen, in welche Federn 26 eingesetzt sind. In die vom Körper 18 abstehenden Enden dieser als Spiralfedern ausgebildeten Federn 26 sind Gleitschuhe 27 eingesteckt.

Das zweite Feststellteil 17 ist plattenförmig ausgebildet und besitzt mehrere Reihen von Aufnahmelöchern 28. Beidseitig eines Langlochs 29 sind jeweils zwei Reihen von Aufnahmelöchern 28 angeordnet, wobei eine jeweilige Reihe von Aufnahmelöchern 28 mehrere entlang einer parallel zur Längsausdehnung des Langlochs 29 verlaufenden gedachten Geraden angeordnete Aufnahmelöcher 28 aufweist.

Den Eingriffselementen 20 sind jeweils mehrere Aufnahmelöcher 28 einer jeweiligen Reihe zugeordnet (wobei ein Aufnahmeloch 28 auch mehreren Eingriffselementen 20 zugeordnet sein kann). Bei einer Verstellung der Lenksäule im geöffneten Zustand der Feststellvorrichtung sind die einem Eingriffselement 20 zugeordneten Aufnahmelöcher 28 wechselweise in eine diesem Eingriffselement 20 gegenüberliegende Position bringbar. Erfolgt ein Schließen der Feststellvorrichtung in einer Position des ersten Feststellteils 16, in welchem ein oder mehrere Eingriffselemente 20 einem zugeordneten Aufnahmeloch 28 im zweiten Feststellteil 17 gerade genau gegenüberliegen, so greift im geschlossenen Zustand das entsprechende Eingriffselement 20 in dieses Aufnahmeloch 28 ein (vgl. in Fig. 9 das rechts oben liegende Eingriffselement 20). Falls einem Eingriffselement 20 kein Aufnahmeloch 28 gegenüberliegt, so wird das Eingriffselement gegen die Kraft der Feder 23 in das entsprechende Loch 19 im Körper 18 hinein verschoben. Wird die Feststellvorrichtung gerade in einer Position des ersten Feststellteils 16 geschlossen, bei welcher keines der Aufnahmelöcher 28 einem Eingriffselement 20 genau gegenüberliegt, so werden alle Eingriffselemente 20 in den Körper 18 hineingedrückt. Falls es aufgrund einer auf die Lenksäule ausgeübten Belastung (beim gewöhnlichen Betrieb oder im Crash-Fall) zu einer Verschiebung des ersten Feststellteils 16 gegenüber dem zweiten Feststellteil 17 kommt, so wird bereits nach einer sehr kurzen Wegstrecke eine Situation erreicht, in welcher ein Eingriffselement 20 in ein entsprechendes Aufnahmeloch 28 einrasten kann. Bei der Ausbildungsform entsprechend Fig. 8 und Fig. 9 ist die Anordnung der acht Eingriffselemente und der vier Lochreihen gerade so gewählt, daß gleichzeitig immer zwei Eingriffselemente in ein Aufnahmeloch 28 einrasten.

Bei der in den Fig. 1 bis 7 dargestellten Lenksäule ist sowohl für die Längsverstellung als auch für die Neigungsverstellung jeweils ein erstes Feststellteil 16 sowie ein zweites Feststellteil 17 vorgesehen. Das erste Feststellteil 16 zur Fixierung der Höhenverstellung ist auf dem Spannbolzen 11 auf der von der Spannvorrichtung 12 abgewandten Seite auf der Außenseite des Schenkels 2 angeordnet und wird von der auf den Spannbolzen 11 endseitig aufgeschraubten Mutter 30 abgestützt. Das zweite Feststellteil 17 mit den Aufnahmelöchern 28 ist an der Außenseite des Schenkels 2 befestigt, wobei das Langloch 29 deckungsgleich mit dem Langloch 8 im Schenkel 2 liegt. Grundsätzlich könnte das zweite Feststellteil 17 auch als Teil des Konsolenteils 1 einteilig mit dem Schenkel 2 ausgebildet sein, wobei die Langlöcher 29 und 8 in diesem Fall zusammenfallen würden.

Die Fig. 1 bis 6 zeigen den geöffneten Zustand der Feststellvorrichtung. Die über das erste Feststellteil 16 hinausragenden freien Enden der Eingriffselemente 20 sind hierbei vom zweiten Feststellteil 17 beabstandet. Die Fortsätze 25 ragen aber durch das Langloch 29 im zweiten Feststellteil 17 bzw. durch das Langloch 8 im Schenkel 2 und verhindern dadurch eine Verdrehung des ersten Feststellteils 16. Die Federn 26 mit den Gleitschuhen 27 ragen ebenfalls durch das Langloch 29 bzw. das Langloch 8 und stützen sich an der Außenseite des Mantelrohrs 3 ab, wodurch das erste Feststellteil 16 vom zweiten Feststellteil 17 beabstandet wird.

In analoger Weise ist zur Fixierung der Längsverstellung der Lenksäule ein weiteres erstes Feststellteil 16 auf dem Spannbolzen 11 im Bereich zwischen den Wangen 6 des Mantelrohrs 3 angeordnet, welches sich an einer Schulter des Spannbolzens 11 gegen eine Verschiebung nach links (Fig. 3) abstützt, und ein weiteres zweites Feststellteil 17 ist an der Innenseite der in den Fig. 3 und 4 rechts liegenden Wange 6 des Mantelrohrs 3 festgelegt. Das Langloch 29 im zweiten Feststellteil 17 ist hierbei deckungsgleich mit dem Langloch 7 in der Wange 6 angeordnet. Auch hier könnte das zweite Feststellteil 17 wiederum grundsätzlich auch einteilig mit der Wange 6 des Mantelrohrs 3 ausgebildet sein. Die Fortsätze 25 dieses weiteren ersten Feststellteils 16 erstrecken sich durch das Langloch 29 des zweiten Feststellteils 17 und das Langloch 7 in der Wange 6, wobei sich die Gleitschuhe 27 am Schenkel 2 abstützen.

Wird ausgehend von der in den Fig. 1 bis 6 dargestellten geöffneten Stellung der Feststelleinrichtung der Spannhebel 13 in Richtung des Pfeils 31 (Fig. 1) verschwenkt, so werden die ersten Feststellteile 16 in den Ansichten gemäß Fig. 3 und Fig. 4 gesehen nach rechts gegen die zweiten Feststellteile 17 gezogen. In Fig. 7 ist die geschlossene Stellung der Feststellteile 16, 17 für die Längsverstellung dargestellt, wobei ein Eingriffselement 20 in ein Aufnahmeloch 28 eingreift.

Im gezeigten Ausführungsbeispiel werden im geschlossenen Zustand der Feststellvorrichtung die Feststellteile 16, 17 aneinander angepreßt, wodurch eine reibschlüssige Verbindung der beiden Teile gegeben ist, zusätzlich zu der formschlüssigen Verbindung im Falle des Eingreifens eines Eingriffselements 20 in ein Aufnahmeloch 28. Der Reibschluß zwischen dem ersten Feststellteil 16 und dem zweiten Feststellteil 17 wird dabei durch die nicht in ein Aufnahmeloch 28 ragenden Eingriffselemente 20, die gegen die Oberfläche des zweiten Feststellteils 17 gedrückt werden, noch verstärkt.

Obwohl ein Aneinanderpressen der Feststellteile 16, 17 im geschlossenen Zustand der Feststellvorrichtung bevorzugt ist, wäre es aber auch denkbar und möglich, daß die ersten Feststellteile 16 im geschlossenen Zustand der Feststellvorrichtung nicht an die zweiten Feststellteile 17 angepreßt sind, sondern noch einen kleinen Abstand gegenüber diesen aufweisen, der kleiner ist als der Überstand d der Eingriffselemente 20 gegenüber den ersten Feststellteilen 16. Es ist in diesem Fall im geschlossenen Zustand der Feststellvorrichtung nur eine geringe reibschlüssige Verbindung durch die an die Oberfläche des zweiten Feststellteils angedrückten Eingriffselemente 20 gegeben, wobei die Festlegung des ersten Feststellteils gegenüber dem zweiten Feststellteil durch die formschlüssige Verbindung eines in ein Aufnahmeloch 28 ragenden Eingriffselements geschaffen wird.

Zur Erleichterung des Einrastens der Eingriffselemente 20 in die Aufnahmelöcher 28 weisen die Eingriffselemente 20 im Bereich ihrer freien Enden vorteilhafterweise Einlaufschrägen 32 auf (vgl. Fig. 8). Die Eingriffselemente 20 können in unterschiedlicher Weise ausgebildet sein, bevorzugt ist aber eine stiftartige Ausbildung. Die Aufnahmelöcher 28 können anstelle des gezeigten kreisrunden Querschnitts auch andere Querschnittsformen besitzen, beispielsweise auch rechteckige. Um Toleranzen aufnehmen zu können, kann ein entsprechendes Spiel zwischen den Aufnahmelöchern 28 und den Eingriffselementen 20 vorgesehen sein. Um das Einrasten eines Eingriffselements bei einer Verschiebung gegenüber dem zweiten Feststellteil 17 zu erleichtern, beispielsweise im Crash-Fall, kann in Verschieberichtung ein größeres Spiel zwischen dem Durchmesser des Eingriffselements 20 und den Durchmessern der zugeordneten Aufnahmelöcher 28 vorgesehen sein als in Richtung senkrecht hierzu.

Unterschiedliche Modifikationen sind denkbar und möglich ohne den Bereich der Erfindung zu verlassen. So können das Konsolenteil und das Mantelrohr der Lenksäule auch in anderer als in der gezeigten Weise ausgebildet sein. Es sind hier verschiedene Ausbildungen denkbar und möglich, beispielsweise zu den aus dem in der Beschreibungseinleitung genannten Stand der Technik bekannten Lenksäulen analoge Ausbildungen. Hierbei könnte beispielsweise zusätzlich zum Konsolenteil 1 und Mantelrohr 3 ein Führungsteil vorgesehen sein, entlang vom dem das Mantelrohr 3 in Längsrichtung der Lenkspindel 4 verschiebbar gelagert ist und welches den Spannbolzen in achsialer Richtung des Spannbolzens verschiebbar lagert, wobei dieses Führungsteil zwischen dem Konsolenteil und dem Mantelrohr angeordnet ist. Bei einer solchen Ausbildung der Lenksäule könnte ein Spannbolzen vorgesehen sein, der das Mantelrohr nicht wie beim gezeigten Ausführungsbeispiel vollständig durchsetzt, sondern lediglich in dieses hineinragt.

### Legende zu den Hinweisziffern:

- 1: Konsolenteil
- 2: Schenkel
- 3: Mantelrohr
- 4: Lenkspindel
- 5: vorderes Ende
- 6: Wange
- 7: Langloch
- 8: Langloch
- 9: Bolzen
- 10: Langloch
- 11: Spannbolzen
- 12: Spannvorrichtung
- 13: Spannhebel
- 14: Nocken
- 15: Schrägfläche
- 16: erstes Feststellteil
- 17: zweites Feststellteil
- 18: Körper
- 19: Loch
- 20: Eingriffselement
- 21: Ringflansch
- 22: Abdeckplatte
- 23: Feder
- 24: Durchgangsbohrung
- 25: Fortsatz
- 26: Feder
- 27: Gleitschuh
- 28: Aufnahmeloch
- 29: Langloch
- 30: Mutter
- 31: Pfeil
- 32: Einlaufschräge

## Patentansprüche

1. Lenksäule mit einem eine Lenkspindel (4) aufnehmenden Mantelrohr (3) und einem chassisfesten Konsolenteil (1), wobei im geöffneten Zustand einer Feststellvorrichtung das Mantelrohr (2) gegenüber dem Konsolenteil (1) begrenzt verschiebbar ist und die Feststellvorrichtung mittels einer Spannvorrichtung (12) öffen- und schließbar ist, **dadurch gekennzeichnet, daß** die Feststellvorrichtung ein erstes Feststellteil (16) mit mindestens einem Loch (19), in dem ein Eingriffselement (20) verschiebbar angeordnet ist, welches von einer ausgefahrenen Position, in welcher es über das erste Feststellteil (16) um einen Überstand (d) vorsteht, gegen die Kraft einer Feder (23) weiter in das Loch (19) hinein verschiebbar ist, und ein zweites Feststellteil (17) mit mehreren dem Eingriffselement (20) zugeordneten Aufnahmelöchern (28) aufweist, welche bei einer Verstellung der Lenksäule im geöffneten Zustand der Feststellvorrichtung wechselweise in eine dem Eingriffselement (20) gegenüberliegende Position bringbar sind, und daß im geöffneten Zustand der Feststellvorrichtung der Abstand zwischen den Feststellteilen (16, 17) größer ist als der Überstand (d) des Eingriffselements (20) in dessen ausgefahrenenr Position und im geschlossenen Zustand der Feststellvorrichtung zur Ermöglichung des Eingriffs des Eingriffselements (20) in ein ihm gegenüberliegendes Aufnahmeloch (28) der Abstand zwischen den Feststellteilen (16, 17) kleiner ist als der Überstand (d) des Eingriffselements (20) in dessen ausgefahrener Position.

2. Lenksäule nach Anspruch 1, **dadurch gekennzeichnet, daß** im geschlossenen Zustand der Feststellvorrichtung das erste und das zweite Feststellteil (16, 17) aneinander angepreßt sind.

3. Lenksäule nach Anspruch 1 oder Anspruch 2, **dadurch gekennzeichnet, daß** das erste Feststellteil (16) mindestens zwei Eingriffselemente (20) aufweist, denen jeweils mehrere Aufnahmelöcher (28) im zweiten Feststellteil (17) zugeordnet sind.

4. Lenksäule nach einem der Ansprüche 1 bis 3, **dadurch gekennzeichnet, daß** die Spannvorrichtung mit einem Spannbolzen (11) zusammenwirkt, der mindestens eine Öffnung im Konsolenteil (1) und mindestens eine Öffnung im Mantelrohr (3) durchsetzt, wobei die Öffnung im Konsolenteil (1) und/oder die Öffnung im Mantelrohr (3) als Langloch (7, 8) ausgebildet ist.

5. Lenksäule nach Anspruch 4, **dadurch gekennzeichnet, daß** mehrere einem Eingriffselement (20) zugeordnete Aufnahmelöcher (28) in einer Reihe entlang einer parallel zur Längsausdehnung des Langlochs (7, 8) verlaufenden Geraden angeordnet sind.

6. Lenksäule nach Anspruch 5, **dadurch gekennzeichnet, daß** beidseitig der Langlöcher (7, 8) mehrere einem jeweiligen Eingriffselement (20) zugeordnete Aufnahmelöcher (28) jeweils in einer Reihe entlang einer parallel zur Längsausdehnung des Langlochs (7, 8) verlaufenden Geraden angeordnet sind, wobei vorzugsweise beidseitig der Langlöcher (7, 8) jeweils mindestens zwei solcher Reihen von Aufnahmelöchern (28) vorgesehen sind.

7. Lenksäule nach einem der Ansprüche 1 bis 6, **dadurch gekennzeichnet, daß** am ersten Feststellteil (16) mindestens eine Feder (26) zur Beabstandung vom zweiten Feststellteil (17) im geöffneten Zustand der Feststettvorrichtung vorgesehen ist.

8. Lenksäule nach Anspruch 7, **dadurch gekennzeichnet, daß** an beidseitig des Spannbolzens (11) in eine Langlochausnehmung (29) des zweiten Feststellteils (17) ragenden Fortsätzen (25) derartige Federn (26) angeordnet sind.

9. Lenksäule nach einem der Ansprüche 1 bis 8, **dadurch gekennzeichnet, daß** am freien Ende des mindestens einen Eingriffselements (20) eine Einlaufschräge (32) ausgebildet ist.

10. Lenksäule nach einem der Ansprüche 1 bis 9, **dadurch gekennzeichnet, daß** das erste Feststellteil (16) einen Körper (18) mit darin angeordneten Löchern (19) zur Aufnahme der Eingriffselemente (20) sowie der Federn (23) und eine Abdeckplatte (22) zur Abdeckung der Löcher (19) auf der dem zweiten Feststellteil (17) gegenüberliegenden Seite des Körpers (18).

11. Lenksäule nach Anspruch 10, **dadurch gekennzeichnet, daß** die Löcher (19) in ihren dem zweiten Feststellteil (17) zugewandten Bereich einen Abschnitt mit einem kleineren Innendurchmesser aufweisen, wobei eine Anlageschulter für einen einen Anschlag bildenden Ringflansch (21) eines jeweiligen Eingriffselements (20) gebildet wird.

## Claims

1. A steering column having a steering column jacket (3) receiving a steering shaft (4) and a console part (1) fixed to the chassis, the steering column jacket (2) being capable of limited displacement with respect to the console part (1) in the open condition of a fixing device and the fixing device being openable and closable by means of a clamping device (12), **characterised in that** the fixing device has a first fixing part (16) having at least one hole (19), in which there is displaceably arranged an engaging element (20) which is displaceable from an extended position, in which it projects beyond the first fixing part (16) with a projection (d), further into the hole (19) in opposition to the force of a spring (23), and a second fixing part (17) having a plurality of receiving holes (28) which are associated with the engaging element (20) and can be brought alternately into a position opposite the engaging element (20) when the steering column is adjusted in the open condition of the fixing device, and **in that**, in the open condition of the fixing device, the spacing between the fixing parts (16, 17) is greater than the projection (d) of the engaging element (20) in its extended position and, in the closed condition of the fixing device to enable the engagement of the engaging element (20) in a receiving hole (28) opposite it, the spacing between the fixing parts (16, 17) is smaller than the spacing (d) of the engaging element (20) in its extended position.

2. A steering column according to Claim 1, **characterised in that** the first and the second fixing part (16, 17) are pressed against one another in the closed condition of the fixing device.

3. A steering column according to Claim 1 or Claim 2, **characterised in that** the first fixing part (16) has at least two engaging elements (20) which each have a plurality of receiving holes (28) associated therewith in the second fixing part (17).

4. A steering column according to one of Claims 1 to 3, **characterised in that** the clamping device cooperates with a clamping pin (11), which passes through at least one opening in the console part (1) and at least one opening in the steering column jacket (3), the opening in the console part (1) and/or the opening in the steering column jacket (3) being constructed as an elongated hole (7, 8).

5. A steering column according to Claim 4, **characterised in that** a plurality of receiving holes (28) associated with an engaging element (20) are arranged in a row along a straight line extending parallel to the longitudinal extent of the elongated hole (7, 8).

6. A steering column according to Claim 5, **characterised in that**, on both sides of the elongated holes (7, 8), a plurality of receiving holes (28) associated with a respective engaging element (20) are arranged in each case in a row along a straight line extending parallel to the longitudinal extent of the elongated hole (7, 8), at least two such rows of receiving holes (28) preferably being provided in each case on both sides of the elongated holes (7, 8).

7. A steering column according to one of Claims 1 to 6, **characterised in that** at least one spring (26) is provided on the first fixing part (16) for realising a spacing from the second fixing part (17) in the open condition of the fixing device.

8. A steering column according to Claim 7, **characterised in that**, on both sides of the clamping pin (11), springs (26) of this type are arranged on projections (25) projecting into an elongated-hole receiving means (29) of the second fixing part (17).

9. A steering column according to one of Claims 1 to 8, **characterised in that** a sloping run-in portion (32) is constructed on the free end of the at least one engaging element (20).

10. A steering column according to one of Claims 1 to 9, **characterised in that** the first fixing part (16) [...]¹
¹ Translator's Note: There seems to be an error or omission here in the German text. a body (18) with holes (19) arranged therein for receiving the engaging elements (20) and the springs (23), and a cover plate (22) for covering the holes (19) on that side of the body (18) which is opposite the second fixing part (17).

11. A steering column according to Claim 10, **characterised in that** the holes (19) have a portion with a smaller internal diameter in their region facing the second fixing part, a bearing shoulder being formed for a stop-forming annular flange (21) of a respective engaging element (20).

## Revendications

1. Colonne de direction comprenant un tube enveloppe (3) recevant un arbre de direction (4) et un élément de console (1) solidaire du châssis, le tube enveloppe (2) pouvant être déplacé de manière limitée par rapport à l'élément de console (1) à l'état ouvert d'un dispositif de blocage et le dispositif de blocage pouvant être ouvert et fermé au moyen d'un dispositif de serrage (12),
**caractérisée en ce que**
le dispositif de blocage présente un premier élément de blocage (16) muni d'au moins un trou (19) logeant de manière mobile un élément d'engrènement (20) qui, à partir d'une position sortie dans laquelle il dépasse du premier élément de blocage (16) d'une saillie (d), peut être déplacé plus loin dans le trou (19) contre la force d'un ressort (23), et un deuxième élément de blocage (17) présente plusieurs trous de réception (28) associés à l'élément d'engrènement (20) et pouvant, lors d'un déplacement de la colonne de direction à l'état ouvert du dispositif de blocage, être amenés en alternance dans une position tournée vers l'élément d'engrènement (20),
à l'état ouvert du dispositif de blocage la distance entre les éléments de blocage (16, 17) est supérieure à la saillie (d) de l'élément d'engrènement (20) dans la position sortie de celui-ci, et à l'état fermé du dispositif de blocage la distance entre les éléments de blocage (16, 17) est inférieure à la saillie (d) de l'élément d'engrènement (20) dans la position sortie de celui-ci pour permettre l'engagement de l'élément d'engrènement (20) dans un trou de réception (28) situé en face de celui-ci.

2. Colonne de direction selon la revendication 1,
**caractérisée en ce qu'**
à l'état fermé du dispositif de blocage le premier et le deuxième élément de blocage (16, 17) sont pressés l'un contre l'autre.

3. Colonne de direction selon la revendication 1 ou 2,
**caractérisée en ce que**
le premier élément de blocage (16) présente au moins deux éléments d'engrènement (20) auxquels sont associés respectivement plusieurs trous de réception (28) dans le deuxième élément de blocage (17).

4. Colonne de direction selon l'une quelconque des revendications 1 à 3,
**caractérisée en ce que**
le dispositif de serrage coopère avec un boulon de serrage (11) qui traverse au moins un orifice dans l'élément de console (1) et au moins un orifice dans le tube de protection (3), l'orifice dans l'élément de console (1) et/ou l'orifice dans le tube de protection (3) étant un trou oblong (7, 8).

5. Colonne de direction selon la revendication 4,
**caractérisée en ce que**
plusieurs trous de réception (28) associés à un élément d'engrènement (20) sont disposés dans une rangée le long d'une droite s'étendant parallèlement à l'étendue longitudinale du trou oblong (7, 8).

6. Colonne de direction selon la revendication 5,
**caractérisée en ce que**
des deux côtés des trous oblongs (7, 8) plusieurs trous de réception (28) associés à un élément d'engrènement (20) respectif sont disposés respectivement dans une rangée le long d'une droite s'étendant parallèlement à l'étendue longitudinale du trou oblong (7, 8), de préférence au moins deux de telles rangées de trous de réception (28) étant prévues des deux côtés des trous oblongs (7, 8).

7. Colonne de direction selon l'une quelconque des revendications 1 à 6,
**caractérisée en ce que**
sur le premier élément de blocage (16) au moins un ressort (26) est prévu pour l'écartement du deuxième élément de blocage (17) à l'état ouvert du dispositif de blocage.

8. Colonne de direction selon la revendication 7,
**caractérisée en ce que**
des ressorts (26) sont disposés sur des appendices (25) saillant dans un évidement oblong (29) du deuxième élément de blocage (17) des deux côtés du boulon de serrage (11).

9. Colonne de direction selon l'une quelconque des revendications 1 à 8,
**caractérisée en ce qu'**
une rampe d'introduction (32) est formée sur l'extrémité libre d'au moins un élément d'engrènement (20).

10. Colonne de direction selon l'une quelconque des revendications 1 à 9,
**caractérisée en ce que**
le premier élément de blocage (16) présente un corps (18) muni de trous (19) pour recevoir les éléments d'engrènement (20) ainsi que les ressorts (23), et une plaque de couverture (22) pour recouvrir les trous (19) sur le côté du corps (18) situé en face du deuxième élément de blocage (17).

11. Colonne de direction selon la revendication 10,
**caractérisée en ce que**
dans leur zone tournée vers le deuxième élément de blocage (17) les trous (19) présentent un segment de diamètre intérieur plus petit en formant un épaulement d'appui pour une bride annulaire (21) en forme de butée d'un élément d'engrènement (20) respectif.
